# EUROPEAN PATENT APPLICATION

(11) **EP 4 556 367 A1**
(43) Date of publication of application: **21.05.2025**
(21) Application number: 23209887.1
(22) Date of filing: 14.11.2023
(51) Int. Cl.: B64D 11/00, B64D 11/04, B64D 47/08

(54) **AIRCRAFT GALLEY CONTAINER DOOR**

(71) Applicant: B/E Aerospace, Inc., Winston-Salem, NC 27105 (US)
(72) Inventor: NEGRE, Ergen Sawit, 4234 Sto. Tomas (PH); SAGUINSIN, Jasper Aaron Oblefias, 4328 Quezon (PH); DE VILLA, Edmundo Catapang, 4000 San Pablo City (PH); MARGES, Marc Medina, 4234 Sto. Tomas (PH); AALA, Cellyn Tapay, 4034 Malvar (PH); PORCINCULA, Marjorie Legaspi, 4232 Tanauan City (PH); NEMES, Mary Claire Valencia, 4027 Calamba (PH)
(74) Representative: Dehns

(57) **Abstract**

Herein is provided a door (6) for an aircraft galley container (2) including a frame and (26) a tablet computer (18). The tablet computer (18) has a touch-screen display configured to display information regarding the contents of the aircraft galley container (2) and to enable a user to control the operation of the aircraft galley container (2). The tablet computer (18) is mounted within or to the frame (26). An aircraft galley container (2) and an aircraft galley are also provided.

## Description

### TECHNICAL FIELD

The present disclosure relates to aircraft galley containers (or aircraft galley inserts), and in particular to a door for aircraft galley containers, with an improved means of control.

### BACKGROUND

Aircraft galleys, for storage and preparation of food, beverages and other items, require careful design to optimise functionality and ease of use, while taking up minimal space in the aircraft and with use of minimal weight.

Aircraft galley inserts, or aircraft galley containers are used in aircraft galleys to enable such functionality and ease of use, and also enable an airline operator to select a desired set of apparatus to store, prepare, and serve the desired food, beverages and other items. This selection may be set for each type of aircraft, or even interchanged for each journey.

The aircraft galley containers can include, among other things, ovens, refrigerators, cupboards, safes etc.

Various aircraft galley containers, in particular, but not exclusively, ovens and refrigerators require a means of control, provided by a human machine interface (HMI). The means of control enables an aircraft crew member to operate the aircraft galley container, for example, controlling temperatures therein, or switching the container on or off.

Some previous aircraft galley containers include controls, such as mechanical buttons and/or dials, which may be prone to break or stop working, and which then may lead to a need to replace the entire aircraft galley container if the individual part cannot be easily repaired.

It is desirable to provide an improved aircraft galley container, in particular with an improved means of control that increases the possible functionality and/or improves the operation of the galley for the aircraft crew members.

It is also desired to provide aircraft galley containers that can be repaired or upgraded without replacement of the whole aircraft galley container.

### SUMMARY

From one aspect, there is provided a door for an aircraft galley container including a frame and a tablet computer. The tablet computer has a touch-screen display configured to display information regarding the contents of the aircraft galley container and to enable a user to control the operation of the aircraft galley container.

In some examples, the tablet computer is replaceably removable from the frame.

In some examples, the door includes a plurality of cameras on the inside of the door.

In some examples, the door includes a plurality of lights, wherein each one of the plurality of lights is associated with one of the plurality of cameras.

In some examples, the door includes a wiring arrangement, an interior panel and foam insulation. The wiring arrangement is for connecting the tablet computer to components of the aircraft galley container. The interior panel is supported by the frame. The foam insulation is between the interior panel and the tablet computer.

There is also provided an aircraft galley container including an enclosure housing and the door of any of the above. The door is movable between an open position and a closed position, wherein, when the door is in the closed position, the enclosure housing and the door together define an internal chamber.

In some examples, the aircraft galley container includes a tubular hinge having an internal space for wiring.

In some examples, the aircraft galley container includes an electronic lock controllable by the tablet computer.

In some examples, the aircraft galley container includes reserve controls for operation of the container separate from the tablet computer.

In some examples, the aircraft galley container includes an air vent panel having a first width greater than 2/3 a second width of the aircraft galley container.

In some examples, the aircraft galley container is an oven.

In some examples, the aircraft galley container includes a plurality of zones configured to be separately controllable to have different temperatures.

In some examples, the aircraft galley container is a refrigerator.

There is also provided an aircraft galley comprising a plurality of the aircraft galley containers of any of the above.

In some examples, each tablet computer is configurable to control any of the aircraft galley containers, and to control further components of the aircraft galley.

Any of the above features may be combined in any combination unless expressly stated otherwise.

### BRIEF DESCRIPTION OF DRAWINGS

Various embodiments of this disclosure will now be described by way of example only, with reference to the accompanying drawings in which:
Figure 1 is a schematic front view of an aircraft galley container, with a closed door.
Figure 2 is a schematic perspective view of an aircraft galley container, with an open door.
Figure 3 is a schematic side cross-sectional view of a door of an aircraft galley container.
Figure 4 is a diagrammatic representation of a possible display arrangement for a display of a door of an aircraft galley container.
Figure 5 is a schematic illustration of an aircraft galley including multiple aircraft galley containers.

### DETAILED DESCRIPTION OF DRAWINGS

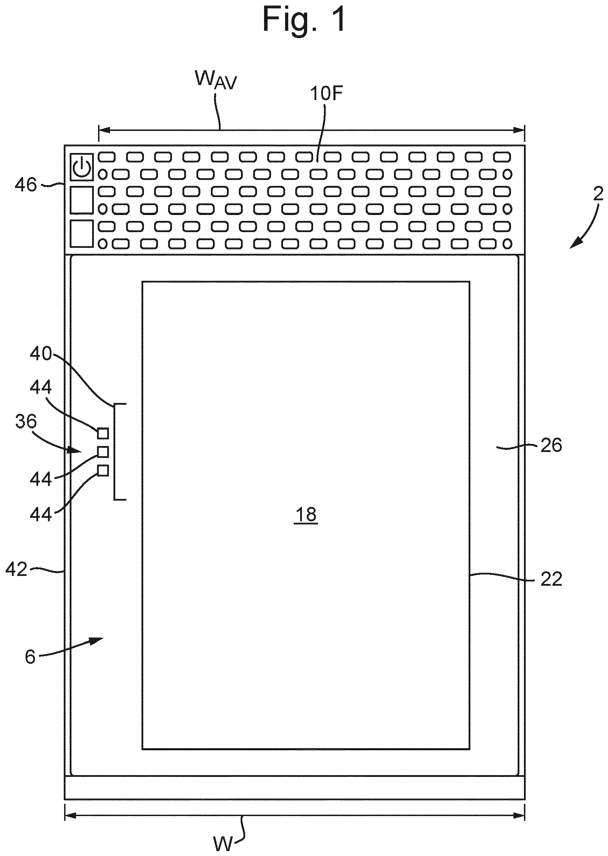

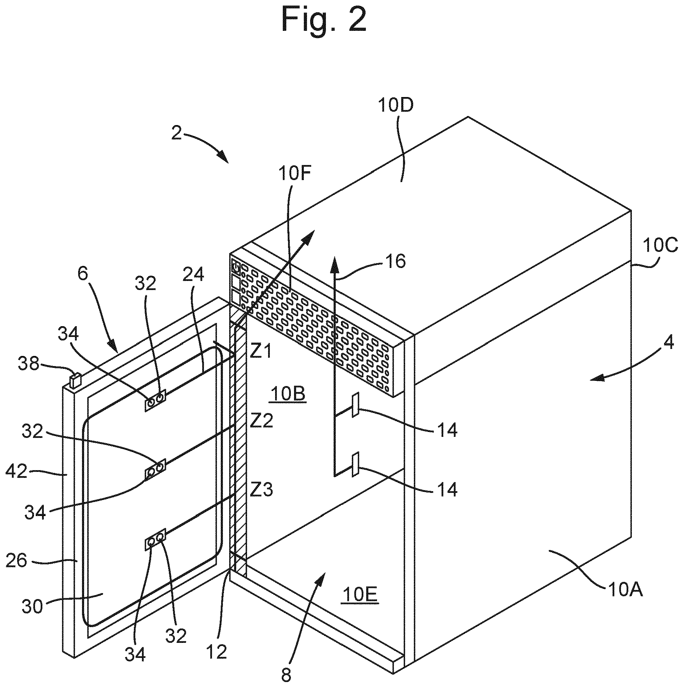

With reference to figures 1 and 2, there is described an aircraft galley container 2, which may be either an aircraft galley refrigerator or an aircraft galley oven.

The aircraft galley container 2 has an enclosure housing 4 and a door 6 together defining an internal chamber 8 within the enclosure housing 4. The enclosure housing 4 includes a pair of opposing side panels 10A, 10B, a back panel 10C, a top panel 10D and a bottom panel 10E. The illustrated enclosure housing 4 also includes an air vent panel 10F, which, together with the door 6, when the door 6 is closed, opposes the back panel 10C.

The door 6 is connected to the enclosure housing 4, and more particularly to one of the side panels 10B by a hinge 12.

The hinge 12 may be a tubular hinge 12, including a bore (or a hollow section, slit or space) within the hinge 12 and shaped to contain wiring as described further below. Such a tubular hinge 12 may have, for example, three rotating parts spaced along its length, and a stationary part, wherein the stationary part does not move with respect to the enclosure housing 4 and the rotating parts are fixed to the door 6 such that when the door is opened the rotating parts rotate.

The internal chamber 8 may be subdivided into a plurality of zones Z1, Z2, Z3. The illustrated container 2 has three zones Z1, Z2, Z3; however, it is appreciated that a different number of zones may be present.

These zones Z1, Z2, Z3 may be configured to each have a different controllable temperature. As illustrated, a first zone Z1 is at the top, the second zone Z2 is in the middle, and a third zone Z3 is at the bottom of the internal chamber 8. The zones Z1, Z2, Z3 may be separated by shelves (not illustrated) having a degree of thermally insulative properties. Alternatively, the zones Z1, Z2, Z3 may be simply notionally separated, and function by virtue of relative distance to heaters. Other shelves may be included that separate the zones Z1, Z2, Z3, but which allow airflow and heat transfer, for example a mesh shelf. When such shelves are used or when there is no physical thermal barrier, the zones may still have temperature differences due to certain manners of heating, for example infra-red heating, or due to thermally insulative properties of the product stored in the internal chamber 8 at each zone Z1, Z2, Z3. For example, a tray of food will provide a thermal barrier at the edge of each zone Z1, Z2, Z3
As illustrated, there are three temperature sensors 14 (only two of which are visible), each being associated with a respective zone Z1, Z2, Z3. As will be appreciated, when there are fewer than or more that three zones Z1, Z2, Z3, there are fewer or more temperature sensors 14 respectively. The temperature sensors 14 could be mounted anywhere within each zone Z1, Z2, Z3 of the internal chamber 8, albeit so that they do not interfere with the location of the product to be stored, heated or cooled therein. In the example illustrated, each temperature sensor is mounted to the side panel 10B.

Wiring 16 is connected to all of the temperature sensors 14 and is configured to provide a power source for the sensors 14, and to communicate signals from each sensor 14 to a processor.

The door 6 of the container 2 includes a tablet computer 18 with a touchscreen on a front face of the door 6. The tablet computer 18 is operable as a human machine interface (HMI), both conveying information to the user, i.e., an aircraft cabin crew member, about the contents of the container 2, and optionally ancillary information. The ancillary information may be, for example, about the flight of the aircraft, such as the location of the aircraft, which may be in the visual form of a map, an intended flight path, aircraft speed etc. The ancillary information could also include details or logos from the airline, for example. The information regarding the contents of the container may include the numbers and types of each product within the container, and/or information about the temperature of the products, or the temperatures of each zone Z1, Z2, Z3 in which the products are held.

The tablet computer 18, and in particular the touchscreen also enables the user to provide inputs, i.e., by tapping, pressing, swiping etc. the touchscreen to control the operation of the container 2. This may be performed by a stylus or stylus type device, or by a finger or hand.

The tablet computer 18 may be programmed so as to have a variety of functions with regard to what and how it can provide controls, and what and how it can present graphics or information to the user. Being a tablet computer 18 the functionality is able to be updated regularly, either by reprogramming the tablet computer 18 as appropriate, or by replacing the tablet computer 18 with an updated tablet computer 18.

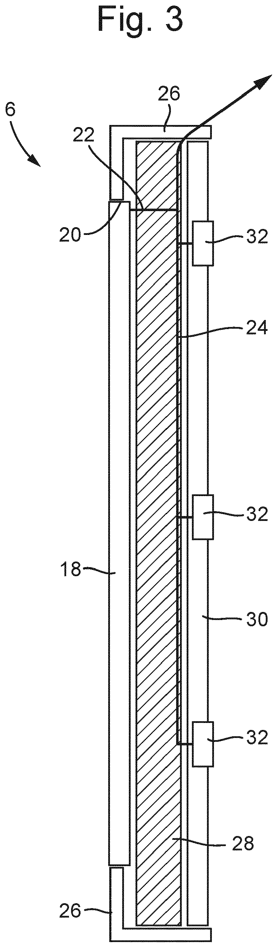

To this end, the tablet computer 18 may be mounted within the door 6, such as within a recess 20 in the front of the door 6 (as illustrated in Figure 3) so as to be replaceably removable, and furthermore, the door 6 and tablet computer 18 each have corresponding electrical connections so as to electrically connect the tablet computer 18 to the door 6 and thereby to the remainder of the container 2. The illustrated electrical connection is shown as wire 22, which is connected to a wiring arrangement 24 within the door 6.

The door 6 includes a frame 26, which provides the recess 20 in which the tablet computer 18 is to be mounted. The illustrated frame 26 is rectangular, as can be appreciated form the figures, and has a rectangular recess 20.

Instead of a recess 20 the door 6 could have other means of mounting a tablet computer 18, such as protruding fixings.

The door 6 also includes some foam insulation 28, an interior panel 30, both of which are held by the frame 26. A plurality of cameras 32 are mounted, for example, inset, on to the interior panel 30. In the example shown the number of cameras 32 corresponds to the number of zones Z1, Z2, Z3 in the container 2, and each camera 32 is associated with a respective one of the zones Z1, Z2, Z3. However, as will be appreciated, more or fewer cameras 32 may be included.

A light 34 is also included with each camera 32. The light 34 acts to illuminate the area inside the internal chamber 8 which the camera 32 associated therewith is capturing images or video. The light 34 may be either an LED based light, or a flashlight. In a preferred arrangement, and LED based light is used to reduce the heat emitted.

The video images from the cameras 32 are able to be shown, in live-time on the tablet computer 18, to show what is within the container 2 to user. Such an image may be either full size, or a small-scale version. A smaller version enables the other space on the screen to be used for other information and/or user inputs.

With this imagery, the user is able to avoid needing to open the door 6 to see inside, which may either let heat escape or enter the internal chamber 8, which would be undesirable for an oven or a refrigerator respectively.

The door wiring arrangement 24 connects the cameras 32 and lights 34 to the tablet computer 18 and to the same processor as the wiring arrangement 16 within the internal chamber 8 and connected to the temperature sensors 14. That processor may be within the tablet computer 18, or may be external to the tablet computer 18 and part of the galley container 2, or indeed of a galley or aircraft as a whole. The temperature sensors 14, wiring arrangement 16 within the internal chamber 8, the cameras 32 and lights, door wiring arrangement 24 connection 22 and tablet computer 18 work together to provide the user information about the contents of the internal chamber 8, optionally together with other information, and to enable the user to control the operation of the galley container 2, for example, by changing the temperature of each of the different zones Z1, Z2, Z3.

The wiring arrangements 16, 24 within the internal chamber 8 and the door 6 respectively may have plastic housing (not shown).

The wiring from each camera 32 and light 34 and the wiring from the tablet computer 18 are connected to a wire or set of wires running inside the hinge 12. This allows for the door wiring arrangement 24 to be connected to the internal chamber wiring arrangement 16, without mechanical interference as the door is opened or closed.

There may be an entry point for a wire from each camera 32 and light 34 pair to pass into the hinge 12 and then to be connected to the other wires within the hinge 12, or alternatively, the wires would be connected outside the hinge on or in a part of the frame 26 of the door 6, and then a single opening be made in the hinge for the single wire to pass into the hinge. Likewise, the wires connected to the temperature sensors 14 may pass into the hinge separately, or connected apart form the hinge and pass into the hinge as one. Those wires may, in some arrangements, not pass into the hinge, and may be connected to a processor without any need for passing into the hinge.

In some arrangements, wireless connectivity may be used. For example, the temperature sensors 14 may be connected to a local transceiver which wirelessly communicates, directly or indirectly, with the tablet computer 18.

The container 2 includes means 36 to open and close, and to lock and unlock the door. These may take any suitable form; however, in preferred arrangements the lock will be an electronic lock, either using an actuator to move a locking pin 38 or using an electromagnet as illustrated and an armature plate. The means 36 may include a handle 40, which may be a bar protruding from the front of the door 6, or may even just include a side 42 of the door frame 26, which a user can use to open the container 2 by friction, once the container 2 is unlocked. The locking means 36 may include buttons and LED indicia, collectively 44, which may be used to lock and unlock the door and to show when the door is in a locked or unlocked state. Alternatively, due to the use of the tablet computer 18 in the present arrangement, the buttons and LED indicia 44 may be removed and instead, the tablet computer 18 can be programmed to include functionality to control the electronic door lock.

The container 2 may include reserve controls 46 for the operation of the container 2. These reserve controls 46 are useful in the event that the tablet computer 18 malfunctions and/or the connections stop correctly functioning. The reserve controls 46 may be simplified as compared to the controls available from the tablet computer, for example, they may include an on/off operation, and a main temperature control for the whole container 2, because they are only intended for use in emergency.

Accordingly, the reserve controls 46 may be smaller than what would otherwise have been required. For example, they may be less than a third of the width (W) of the container 2, or less than 20% of the width (W), or less than 10% of the width (W).

This enables the air vent panel 10F to have a larger width (W_{AV}), of more than 2/3, more than 80%, or more than 90% respectively. That is, the air vent panel 10F takes up more of the width (W) of the container 2, which enables it to operate more efficiently, and/or quietly. Alternatively, other components could be used, or storage space be provided in the space provided by using smaller reserve controls 46 relative to a full set of controls at the top of the front of the container 2.

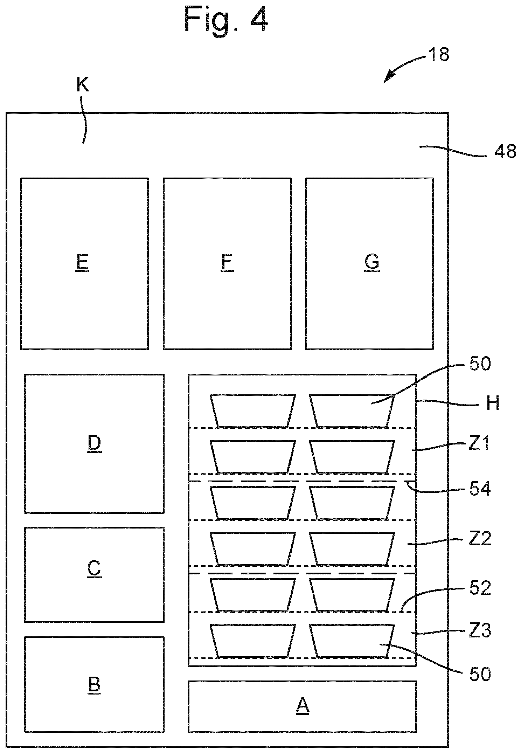

With reference to Figure 4 an exemplary display arrangement 48 for the tablet computer 18 is described. As will be understood, this is only one example, and a tablet computer 18 is particularly beneficial because it can be programmed to display almost anything, at the same time as being able to use its touchscreen to receive inputs from a user.

The exemplary display arrangement 48 is divided into display areas A, B, C, D, E, F, G, H, each configured to display different information. There is also a background area K, in which information may also be displayed.

A first display area A may be configured to show an airline logo and/or or logo from the aircraft manufacturer.

A second display area B may be configured to show a live flight map with an indication of the location of the aircraft and planned further route.

A third display area C may be configured to show flight information, such as the origin and destination airport and the expected time remaining on the flight, together with the time from the departing and arriving time zones. This, together with the information in display B can help inform the user, i.e., cabin crew/flight attendant, to know how quickly they need to serve the food, drink or other products in the container 2 to the customers, and/or to decide time left is not sufficient.

A fourth display area D may be configured to show a menu, detailing what product is in which zone Z1, Z2, Z3 of the container 2 and optionally how many of each product remains. This may be particularly helpful where the user cannot easily determine from the camera imagery (shown in display area H) which product is which.

A fifth display area E, when the container 2 is an oven, may be configured to show the cooking mode of the oven for each zone Z1, Z2, Z3. For example, the first zone Z1 may be on a "keep warm" setting, the second zone Z2 may be on a "low steam" setting, finishing off cooking, and the third zone Z3 may be on a "medium steam" setting for more intense cooking. This may be helpful for a user to know when food is ready to be served, and also warns the user that caution may be required when opening the oven, and/or that the oven must ideally be kept closed whilst cooking finishes.

A sixth display area F may be configured to show a status of the container 2 for each zone Z1, Z2, Z3. For example, the status may include whether the food or drink is ready, e.g., at the right temperature, for serving, or whether longer is needed in the container 2 to reach the right temperature, and if so, how long is needed.

A seventh display area G may be configured to show a temperature of each zone Z1, Z2, Z3, as determined by the temperature sensors 14 discussed above.

An eighth display area H may be configured to show a real-time image of what is in the container 2. This real time image uses the output from the camera 32 as lit by the lights 34 discussed above. The image shows products 50, in the example shown, trays of food, in each zone Z1, Z2, Z3 of the container 2. The products 50 as shown are on shelves 52, and dividing shelves 54 (the lines with longer dashes) can be seen dividing the different zones Z1, Z2, Z3. The shelves 52 and/or dividing shelves 54 may be on rollers to enable them to be slid out of the container 2 for easier access to the products 50. While illustrated as the same, it will be appreciated that the products 50 may be different in each zone Z1, Z2, Z3. The use of the zones Z1, Z2, Z3 allows either for different temperature parameters to be used for different products 50, or for different parameters for different batches of the same product 50, to ensure service of the products 50 may be at the optimal time.

The background area K may display generic information about the container 2, for example, the overall status of 'cooking/off' or an 'active/inactive' status. This area K may also be used to show whether the door 6 is open or locked, when such control is performed by the tablet computer 18 rather than separately with the means 36 to lock and unlock the door 6.

For user input to the touchscreen of the tablet computer 18, the user may touch anywhere on the screen to initiate control. There are a variety of possibilities for exactly how such control is achieved. For example, the user could touch one of the display areas A-H relevant to the control they wish to perform, such as pressing on the cooking mode display area E to control which cooking mode the oven is to be placed in, or touching the menu display area D to input that products 50 have been removed and thereby indicating that fewer products 50 of a certain type remain in the container 2. The tablet computer 18 could be configured such that more detailed information about a particular one of the display areas A-H may be shown by touching that display area A-H. For example, further flight data could be shown after a user touches the flight information display area C. This presentation could fill more of the screen and the user be provided with a `back' button to go back to the usual display.

The touchscreen could be configured to turn off after a certain amount of time, for example 1 minute, 3 minutes, or 5 minutes, without being used, and then configured to turn on again after a touch from a user. This enables power saving when the display arrangement 48 is not in use.

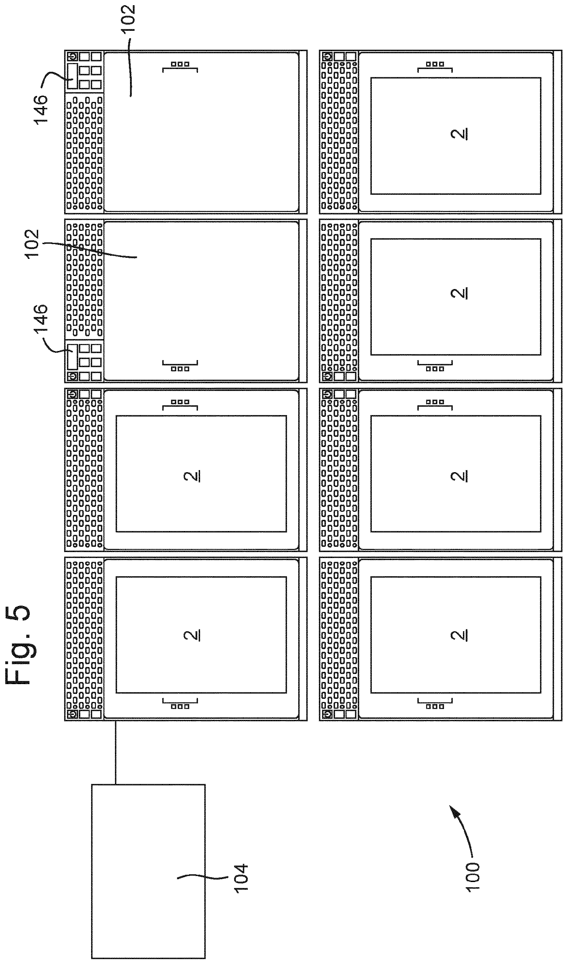

The tablet computer 18 could also be used for other functions, not directly linked to the container 2 to which it is attached. For example, as discussed below with reference to Figure 5, the tablet computer 18 could be used to view data from, and to control parameters for other galley containers 2.

Figure 5 shows an exemplary aircraft galley 100, or part of an aircraft galley. It will be appreciated that this is only one example of an aircraft galley 100 and that various other configurations are possible, with other aircraft galley inserts, such as beverage makers, cupboards, safes, etc.

The illustrated aircraft galley 100 includes a plurality of aircraft galley containers 2 as described above, and also some different aircraft galley containers 102. The different aircraft galley containers 102 do not include a tablet computer 18, but instead have a control panel 146. Galley 100 includes a central processor 104 which may be located in the galley 100 or may be elsewhere in the aircraft, but electrically connected to the galley 100. The central processor 104 is connected to all of the aircraft galley containers 2, 102 that require control, and is operable to allow simultaneous control of multiple aircraft galley containers 2, 102. The galley 100 may be arranged with the tablet computers 18 configured to be able to control separately each of the other aircraft galley containers 2, 102. The user may select from any one of the tablet computers 18 which of the aircraft galley containers 2, 102 they wish to view information about and/or control, and then can operate said aircraft galley container 2, 102 as desired. In this way, the possible functionality of the aircraft galley 100 is maximised.

It can be beneficial to have a separate tablet computer 18 for each aircraft galley container 2. This means the user(s) can view quickly what is in each container 2 simultaneously, and allows for multiple users to control multiple aircraft galley containers 2 simultaneously. Having multiple tablet computers 18 allows the efficiency of use of the galley to be maximised in various circumstances. Multiple tablet computers 18 configured to control any of the aircraft galley containers 2, 102, also allows for redundancy in case any of the tablet computers 18 should malfunction. Having some aircraft galley containers 102 without tablet computers 18 allows for cost savings and/or weight savings.

In addition to each of the tablet computers 18, the central processor 104 may be connected, or connectable to, a separate control panel or computer, via which each of the aircraft galley containers 2, 102 may be operated. This separate control panel or computer could, for example, be in the aircraft cockpit, which would allow for pilot override. Such override may be useful in an emergency event where it would be appropriate to turn all the ovens off, or in a high turbulence event, where it could be useful to ensure the doors 6 are all locked during the period of high turbulence.

Should the tablet computers 18 of the aircraft galley containers 2 either break, or need replacing to upgrade, this is straightforward. The tablet computer 18 for each aircraft galley container 2 may be removed from the front of the door 6, and disconnected from the electrical connection 22, and a new tablet computer 18 inserted and mounted to the front of the door 6, for example in the recess 20. If using the recess 20 and the new tablet computer 18 is a different size to the previous tablet computer 18, spacers may be used to fill spare space in the recess 20, or the tablet computer 18 could be mounted in front of the recess 20.

It can be seen in Figure 5 that some of the aircraft galley containers 2, 102 are configured to open one way on their hinges 12, and some are configured to open the other way. Which way each door 6 opens can be decided based on the requirements in the final aircraft galley 100.

Although the present invention has been described with reference to preferred embodiments, it will be understood by those skilled in the art that various changes in form and detail may be made without departing from the scope of the invention as set forth in the accompanying claims. For example, different sizes and shapes of aircraft galley containers 2 may be used, and there are a variety of options for what information is displayed on the tablet computer 18 and what controls a user may perform via the tablet computer 18.

## Claims

1. A door (6) for an aircraft galley container (2) comprising:
a frame (26); and
a tablet computer (18) having a touch-screen display configured to display information regarding the contents of the aircraft galley container (2) and to enable a user to control the operation of the aircraft galley container (2), wherein the tablet computer (18) is mounted within or to the frame (26).

2. The door of claim 1, wherein the tablet computer (18) is replaceably removable from the frame (26).

3. The door of claim 1 or 2, comprising a plurality of cameras (32) on the inside of the door (6).

4. The door of claim 3, comprising a plurality of lights (34), wherein each one of the plurality of lights (34) is associated with one of the plurality of cameras (32).

5. The door of any preceding claim, comprising:
a wiring arrangement (24) for connecting the tablet computer (18) to components of the aircraft galley container (2);
an interior panel (30) supported by the frame (26); and
foam insulation (28) between the interior panel (30) and the tablet computer (18).

6. An aircraft galley container (2) comprising:
an enclosure housing (4); and
the door (6) of any preceding claim, wherein the door (6) is movable between an open position and a closed position, wherein, when the door (6) is in the closed position, the enclosure housing (4) and the door (6) together define an internal chamber (8).

7. The aircraft galley container of claim 6, comprising a tubular hinge (12) having an internal space for wiring.

8. The aircraft galley container of claim 6 or 7, comprising an electronic lock (36, 38) controllable by the tablet computer (18).

9. The aircraft galley container of any of claims 6 to 8, comprising reserve controls (46) for operation of the container (2) separate from the tablet computer (18).

10. The aircraft galley container of any of claims 6 to 9, comprising an air vent panel (10F) having a first width (W_{AV}) greater than 2/3 a second width (W) of the aircraft galley container (2).

11. The aircraft galley container of any of claims 6 to 10, wherein the aircraft galley container (2) is an oven (2).

12. The aircraft galley container of claim 11, comprising a plurality of zones (Z1, Z2, Z3) configured to be separately controllable to have different temperatures.

13. The aircraft galley container of any of claims 6 to 10, wherein the aircraft galley container (2) is a refrigerator.

14. An aircraft galley (100) comprising a plurality of the aircraft galley containers (2) of any of claims 6 to 13.

15. The aircraft galley of claim 14, wherein each tablet computer (18) is configurable to control any of the aircraft galley containers (2), and to control further components (102) of the aircraft galley (100).
